# FASCICULE DE BREVET EUROPEEN

(11) **EP 1 438 516 B1**
(45) Date de publication et mention de la délivrance du brevet: **04.04.2007**
(21) Numéro de dépôt: 02801929.7
(22) Date de dépôt: 02.10.2002
(51) Int. Cl.: F16D 13/75

(54) **EMBRAYAGE A FRICTION, POUR VEHICULE AUTOMOBILE, EQUIPE D'UN DISPOSITIF DE RATTRAPAGE DE JEU PILOTE**
REIBUNGSKUPPLUNG MIT GESTEUERTER NACHSTELLVORRICHTUNG, INSBESONDERE FÜR KRAFTFAHRZEUGE
FRICTION CLUTCH, FOR MOTOR VEHICLE, EQUIPPED WITH A MONITORED PLAY COMPENSATION DEVICE

(30) Priorité: 23.10.2001 FR 0113701
(43) Date de publication de la demande: 21.07.2004
(73) Titulaire: VALEO EMBRAYAGES, 80009 Amiens Cedex 1 (FR)
(72) Inventeur: MARIE, Eric, F-80800 Villers Bretonneux (FR); OSMAN, Hafiz, F-59650 Villeneuve d'Ascq (FR); PAYRAUDEAU, Gilles, F-80310 Saint Vast en Chaussee (FR); SAINT-MARTIN, Yves, F-80450 Camon (FR)
(74) Mandataire: Vignesoult, Serge L. M.
(86) Numéro de dépôt international: PCT/FR2002/003348
(87) Numéro de publication internationale: WO 2003/036116

(56) Documents cités:
- WO-A-01/88400
- US-A- 5 469 760
- US-A- 5 641 048

## Description

La présente invention concerne un embrayage à friction, pour véhicule automobile à moteur thermique, et se rapporte plus particulièrement à un embrayage équipé d'un dispositif de rattrapage du jeu dû principalement à l'usure des garnitures de friction, ledit dispositif opérant continûment au fur et à mesure de l'usure desdites garnitures.

Un embrayage à friction classique comporte généralement un plateau de réaction, éventuellement en deux parties pour formation d'un volant amortisseur, calé en rotation sur un premier arbre, usuellement un arbre menant tel que le vilebrequin du moteur à combustion interne, et supportant par sa périphérie externe un couvercle auquel est rattaché au moins un plateau de pression.

Le plateau de pression est solidaire en rotation du couvercle et du plateau de réaction tout en pouvant se déplacer axialement sous la sollicitation de moyens élastiques à action axiale commandés, généralement un diaphragme métallique prenant appui sur le couvercle, tandis qu'un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement. Le diaphragme commande le déplacement axial du plateau de pression lorsqu'il est actionné par une butée de débrayage.

Au cours de la durée de vie d'un tel embrayage, les garnitures de friction ainsi que, dans une moindre mesure, les contre-matériaux, plateau de pression et plateau de réaction, s'usent, ce qui provoque une variation de la force de serrage entre le disque de friction, d'une part, et les plateaux de pression et de réaction, d'autre part, en raison des modifications des conditions de travail du diaphragme. La course d'embrayage varie également, ainsi que la force nécessaire pour débrayer. En dotant un tel embrayage d'un dispositif de rattrapage du jeu dû principalement à l'usure des garnitures, on évite ces inconvénients.

On connaît par le document FR 2 426 834 un dispositif de rattrapage de jeu dans lequel un premier plateau, en l'occurrence le plateau de pression, est en deux parties coaxiales déplaçables axialement l'une par rapport à l'autre de façon à ce que l'épaisseur globale du premier plateau augmente au fur et à mesure que l'usure augmente.

Dans ce document, les deux parties coaxiales du premier plateau sont déplaçables axialement l'une par rapport à l'autre grâce à un dispositif de rattrapage qui comporte des moyens de rampes portés de manière complémentaire par les deux parties coaxiales qui sont en outre déplaçables en rotation l'une par rapport à l'autre dans le sens de l'augmentation de ladite épaisseur globale et empêchées de tourner l'une par rapport à l'autre dans le sens contraire au précédent par un moyen unidirectionnel. La mise en mouvement de rotation relative des parties coaxiales est commandée par un déclencheur sensible à l'état d'usure et réalisée par un moyen élastique à action circonférentielle attelé entre lesdites deux parties coaxiales.

Un tel dispositif permet effectivement de rattraper de manière continue le jeu dû à l'usure des garnitures de friction.

On a également proposé, notamment dans le document FR-A-2 750 467, un embrayage du genre ci-dessus qui soit de réalisation plus simple, en ayant un moindre nombre de pièces.

Selon ce document, un embrayage à friction, notamment pour véhicule automobile, du genre comportant un plateau de réaction destiné à être calé en rotation sur un arbre menant, un disque de friction, portant à sa périphérie externe des garnitures de friction, destiné à être calé en rotation sur un arbre mené, un plateau de pression, un couvercle fixé sur le plateau de réaction, des moyens élastiques à action axiale agissant entre le couvercle et le plateau de pression, le plateau de pression étant solidaire en rotation du couvercle tout en pouvant se déplacer axialement par rapport à lui, l'un des deux plateaux, plateau de réaction ou plateau de pression, dit premier plateau, étant constitué de deux demi-plateaux, un demi-plateau, dit externe, et un demi-plateau, dit interne, le demi-plateau interne étant celui qui fait face à une garniture de friction et qui est destiné à coopérer avec elle, les deux demi-plateaux étant solidaires en rotation de l'arbre menant mais déplaçables axialement, l'un par rapport à l'autre, sous l'action d'un dispositif de rattrapage du jeu dû à l'usure principalement des garnitures de friction, lequel dispositif de rattrapage de jeu comprend au moins une paire de rampes complémentaires disposées circonférentiellement associées respectivement à chacun des deux demi-plateaux, l'une des rampes, dite rampe d'appui, étant solidaire en rotation de l'un des demi-plateaux, l'autre rampe, dite rampe d'ajustage, étant solidaire de l'autre demi-plateau et adaptée à se déplacer circonférentiellement par rapport à la rampe d'appui, dans le sens de l'augmentation de l'épaisseur globale dudit premier plateau, dit sens de rattrapage, et empêchée de se déplacer dans l'autre sens par un moyen dit unidirectionnel, ledit déplacement circonférentiel étant commandé par un déclencheur sensible à l'état d'usure.

Selon ce document, la rampe d'ajustage est ménagée à la périphérie d'une pièce d'inertie, en sorte que l'acyclisme du moteur thermique du véhicule automobile est mis à profit pour faire effectuer aux rampes complémentaires leur déplacement circonférentiel relatif dans le sens de rattrapage du jeu. En effet, comme on le sait, l'acyclisme en rotation se traduit par des accélérations angulaires alternées qui peuvent atteindre plus ou moins deux mille radians par seconde carrée ; grâce à la pièce d'inertie soumise à ces accélérations angulaires, lorsque l'embrayage est débrayé et que, dès lors, les deux demi-plateaux ne sont plus sous l'effort axial des moyens élastiques à action axiale, la rampe d'ajustage tourne dans le sens de rattrapage par rapport à la rampe d'appui, puisque le moyen unidirectionnel l'empêche de tourner dans l'autre sens. Ainsi, il n'est pas nécessaire de prévoir un moyen élastique à action circonférentielle entre les deux parties dites coaxiales et on tire profit de l'acyclisme.

Comme on le voit également, le fonctionnement du dispositif de rattrapage de jeu est automatique. L'expérience a montré qu'il peut se trouver des cas où cet automatisme est un inconvénient car conduisant à une opération de rattrapage non liée à l'usure, opération dite de sur-rattrapage.

C'est le cas par exemple à très basse vitesse, en dessous de la vitesse de ralenti, et notamment lorsque le plateau de réaction, ou volant, est un double volant amortisseur dont la fréquence propre de vibrations est située dans cette plage de basses vitesses et produit des vibrations conduisant le demi-plateau externe à se déplacer et à rattraper un "jeu" qui n'existe pas.

D'autres phénomènes parasites peuvent se produire à des vitesses plus élevées, par exemple au dessus de deux mille tours par minute.

Pour éviter ces inconvénients, il a été proposé dans la demande de brevet français déposée le 19 Mai 2000, sous le numéro 00 06480, un embrayage à friction pour véhicule automobile à moteur thermique, du genre comportant un plateau de réaction destiné à être calé en rotation sur un arbre menant, un disque de friction, portant à sa périphérie externe des garnitures de friction, destiné à être calé en rotation sur un arbre mené, un plateau de pression, un couvercle fixé sur le plateau de réaction, des moyens élastiques à action axiale agissant entre le couvercle et le plateau de pression, le plateau de pression étant solidaire en rotation du couvercle tout en pouvant se déplacer axialement par rapport à lui, l'une des pièces, plateau de réaction ou plateau de pression ou couvercle, étant constituée de deux demi-pièces, déplaçables axialement, l'une par rapport à l'autre, sous l'action d'un dispositif de rattrapage du jeu dû à l'usure, lequel dispositif de rattrapage de jeu comprend au moins une paire de rampes complémentaires disposées circonférentiellement associées axialement respectivement à chacune des deux demi-pièces, l'une des rampes étant adaptée à se déplacer circonférentiellement par rapport à l'autre rampe dans le sens de l'augmentation de l'épaisseur globale de ladite pièce, dit sens de rattrapage, et empêchée de se déplacer dans l'autre sens par un moyen dit unidirectionnel, ledit déplacement circonférentiel étant commandé par un déclencheur sensible à l'état d'usure, l'une des rampes étant ménagée à la périphérie d'une pièce d'inertie, en sorte que l'acyclisme du moteur thermique du véhicule automobile est mis à profit pour faire effectuer aux rampes complémentaires leur déplacement circonférentiel relatif dans le sens de rattrapage du jeu, lequel embrayage comprend des moyens de pilotage adaptés à piloter le dispositif de rattrapage de jeu en autorisant ou non son fonctionnement.

Selon les figures 39 et 40 de ce document, le moyen unidirectionnel est un segment fendu et les moyens de pilotage comprennent un levier disposé globalement radialement, dont l'extrémité est entre les extrémités du jonc fendu et qui est adapté à expanser le segment fendu.

Dans la forme décrite et représentée, l'extrémité interne du levier est dans une encoche du demi-plateau qui est ainsi adapté à déplacer cette extrémité dans un sens ou dans l'autre lorsqu'il est soumis à une accélération dans un sens ou dans l'autre, générant un blocage dans les deux sens.

Un tel embrayage fonctionne bien ; toutefois, dans certains cas, le levier qui n'est pas arrêté positivement radialement est amené, sous l'action de la force centrifuge, à venir perturber le pilotage du dispositif de rattrapage de jeu.

La présente invention a pour but de remédier à ces inconvénients.

Selon l'invention, un embrayage à friction du type ci-dessus est caractérisé par le fait que le levier est monté à rotation sur ladite pièce en sorte qu'il est retenu radialement à l'égard de la force centrifuge.

Avantageusement, ladite pièce est l'un des deux plateaux, plateau de réaction ou plateau de pression, dit premier plateau, constitué de deux demi-plateaux, un demi-plateau, dit externe, et un demi-plateau, dit interne, le demi-plateau interne étant celui qui fait face à une garniture de friction et qui est destiné à coopérer avec elle, les deux demi-plateaux étant solidaires en rotation de l'arbre menant mais déplaçables axialement, l'un par rapport à l'autre, sous l'action du dispositif de rattrapage de jeu, l'une des rampes dite rampe d'appui, étant solidaire en rotation de l'un des demi-plateaux, l'autre rampe, dite rampe d'ajustage, étant adaptée à se déplacer circonférentiellement par rapport à la rampe d'appui dans le sens de l'augmentation de l'épaisseur globale dudit premier plateau.

De préférence, la rampe d'appui est portée par le demi-plateau interne.

Avantageusement, la rampe d'ajustage est portée par le demi-plateau externe.

Selon une forme de réalisation préférée, le premier plateau est le plateau de pression.

Avantageusement, les moyens élastiques à action axiale sont constitués d'un diaphragme, et le demi-plateau externe est muni d'un cordon d'appui pour le diaphragme.

La rampe d'ajustage comprend une série de rampes s'étendant circonférentiellement en extrémité d'une pièce annulaire en tôle découpée et pliée constituant le demi-plateau externe.

De préférence, le levier comprend une partie dite active disposée au droit de la fente du segment fendu.

Avantageusement, les extrémités du segment fendu qui définissent sa fente ont une extension radiale.

De préférence, l'extension radiale est obtenue par des patins rapportés aux extrémité du segment.

En variante, l'extension radiale est obtenue par une conformation en boucles des extrémités du segment.

De préférence, le segment est en une seule pièce.

En variante, le segment est en deux pièces agrafées.

Avantageusement, le segment fendu est retenu axialement.

De préférence, la retenue axiale du segment fendu est obtenue par des picots radiaux, qu'il porte intérieurement, reçus dans une gorge ou rainure externe.

De préférence, le segment fendu est sollicité élastiquement ciconférentiellement dans un sens de rotation.

Avantageusement, le moyen de rotation est un axe ; en variante, le moyen de rotation est une articulation.

Avantageusement, pour la retenue axiale du levier, sa partie active est reçue dans des rainures radiales ménagées aux extrémités du segment.

D'autres caractéristiques et avantages de l'invention ressortiront d'ailleurs de la description qui va suivre, à titre d'exemple, en référence aux dessins annexés dans lesquels :
- la figure 1 est une vue partielle en plan d'un embrayage à friction selon l'invention ;
- les figures 2 et 3 sont des vues en coupe selon II - II et III - III de la figure 1, respectivement ;
- la figure 4 est une vue en coupe axiale du demi-plateau externe de l'embrayage de la figure 1 ;
- la figure 5 est une vue selon la flèche V de la figure 4 ;
- la figure 6 est une vue en perspective du demi-plateau des figures 4 et 5;
- la figure 7 est une vue partielle de la figure 1 à plus grande échelle ;
- la figure 8 est une vue schématique illustrant le fonctionnement des moyens de pilotage de l'embrayage des figures 1 à 7 ;
- la figure 9 concerne une variante de jonc fendu ;
- la figure 10 concerne encore une autre variante de jonc fendu ;
- la figure 11 est une vue analogue à la figure 7 et montre une variante ;
- la figure 12 est une vue selon la flèche XII de la figure 11.

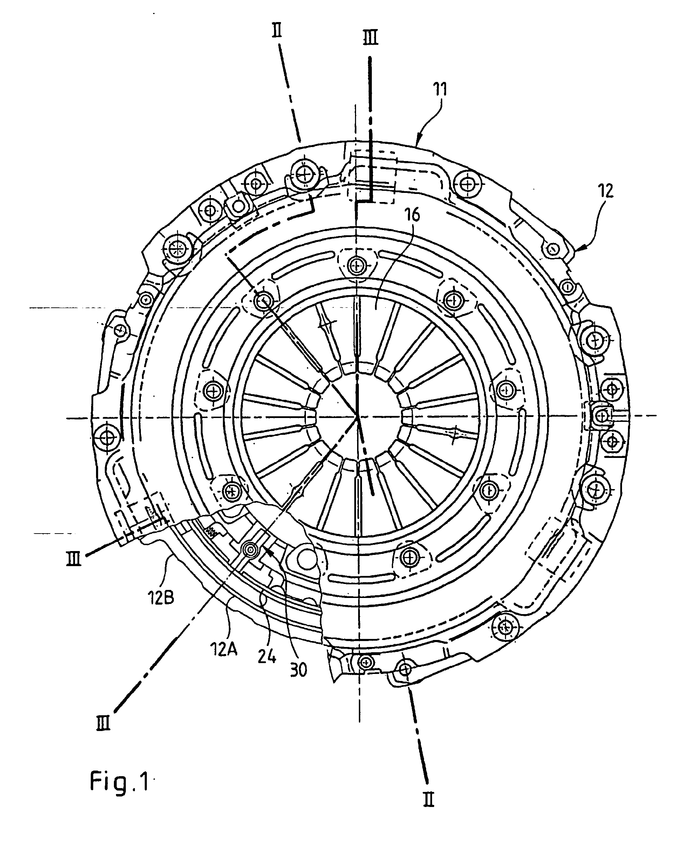

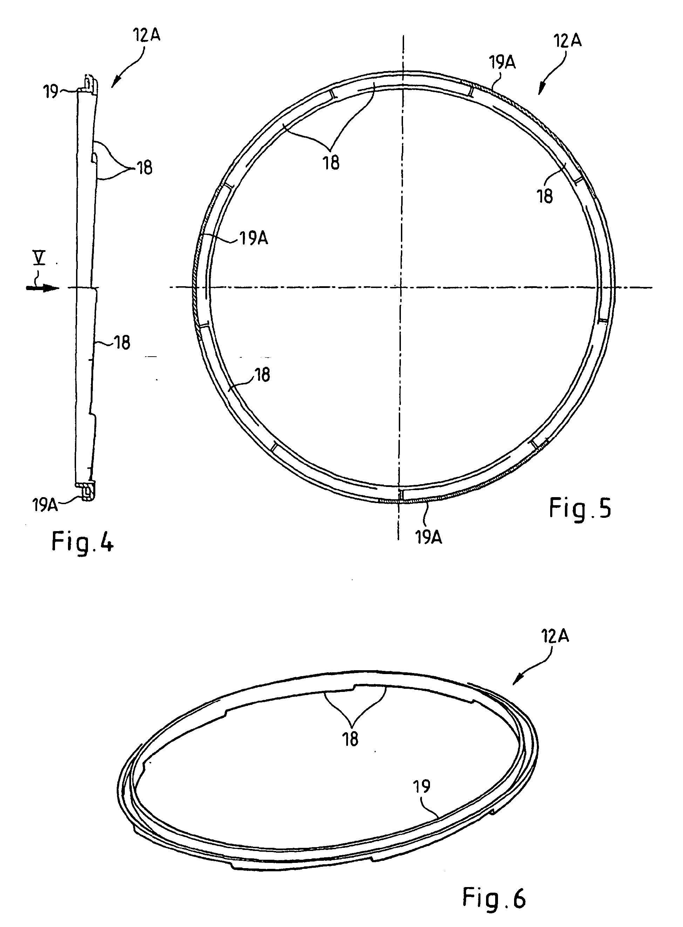

En se reportant aux figures 1 à 7, on voit que l'embrayage comprend un plateau de réaction 13 destiné à être calé en rotation sur un arbre menant, ici le vilebrequin d'un moteur thermique d'un véhicule automobile, un disque de friction 14 portant à sa périphérie externe des garnitures de friction 15 et destiné à être calé en rotation sur un arbre mené.

Un couvercle 11 est fixé sur le plateau de réaction 13 et des moyens élastiques à action axiale, ici un diaphragme 16, agit entre le couvercle 11 et un plateau de pression 12 solidaire en rotation du couvercle 11 mais pouvant se déplacer axialement par rapport à lui, le diaphragme 16 appliquant, en prenant appui sur le couvercle 11, le plateau de pression 12 contre le disque de friction 14 en sorte que les garnitures de friction 15 sont serrées entre les plateaux de pression 12 et de réaction 13 ; comme connu en soi, le diaphragme 16 est monté articulé sur le couvercle 11 par des attaches 21 rivetées sur celui-ci et prend appui sur le couvercle selon une portée circonférentielle 20 qu'il présente.

Le plateau de pression 12 est constitué de deux demi-plateaux ; un demi-plateau 12A dit demi-plateau externe, et un demi-plateau 12B, dit demi-plateau interne, qui fait face directement au disque de friction 14 ; des languettes tangentielles relient classiquement le demi-plateau interne 12B au couvercle 11, pour liaison, avec mobilité axiale, du plateau de pression 12 avec le couvercle 11.

Les deux demi-plateaux 12A, 12B sont solidaires en rotation de l'arbre menant mais déplaçables axialement, l'un par rapport à l'autre, sous l'action d'un dispositif de rattrapage de jeu dû à l'usure.

Le dispositif de rattrapage de jeu comprend des rampes 17, 18 complémentaires disposées circonférentiellement et associées respectivement à chacun des deux demi-plateaux 12A, 12B.

Plus précisément, le demi-plateau externe 12A est une pièce annulaire logée au droit d'un redent 25 du demi-plateau interne 12B ; la longueur axiale de la pièce annulaire 12A est supérieure à la hauteur axiale du redent 25 et son extrémité qui fait face au couvercle 11 est conformée en un cordon d'appui 19 pour le diaphragme 16.

Sur sa face tournée vers le demi-plateau 12B, la pièce annulaire 12A porte des rampes 18, dont l'axe est l'axe de l'embrayage et qui constituent la rampe d'ajustage.

Par ses rampes 18, la pièce annulaire 12A constituant le demi-plateau externe coopère avec des rampes 17, complémentaires des rampes 18, réalisées dans le demi-plateau interne 12B et constituant la rampe d'appui.

Un segment 24 fendu entoure le redent 25 en étant disposé radialement entre ledit redent 25 et le demi-plateau 12A. Ici, le segment 24 est d'une seule pièce, de forme globalement annulaire.

Le sens des rampes d'appui 17 et d'ajustage 18 est tel que, lorsque le demi-plateau 12A est soumis à une accélération dans un sens, la rampe d'ajustage 18 se déplace en rotation par rapport à la rampe d'appui 17 et le demi-plateau 12A, lors de ce déplacement, avance axialement par rapport au demi-plateau interne 12B en direction du couvercle 11, ledit sens ayant été choisi en conséquence ; ainsi, l'acyclisme du moteur thermique suffit pour faire sortir axialement le demi-plateau externe 12A par rapport au redent 25 si, bien entendu, rien ne s'oppose à cette sortie, comme expliqué ci-après.

Le dispositif de rattrapage de jeu comprend également un déclencheur constitué d'au moins une goupille 22 fendue élastique à expansion radiale introduite dans un passage 28 qu'elle traverse ménagé dans une patte d'extrémité radiale 29 du demi-plateau interne 12B ; le diamètre du passage 28 est inférieur au diamètre extérieur de la goupille 22 à l'état libre en sorte que celle-ci est montée à frottement dans le passage 28 et immobilisée axialement par rapport au demi-plateau interne 12B ; ce frottement d'immobilisation est prévu d'une valeur telle qu'il peut être surmonté par l'effort axial dû au diaphragme 16 et qu'il ne peut pas être surmonté par l'effort de rappel auquel est soumis le plateau de pression 12, effort de rappel tel que celui provenant habituellement des languettes tangentielles accouplant en rotation ledit plateau de pression 12, ici le demi-plateau 12B, et le couvercle 11.

Avantageusement, trois goupilles telles que la goupille 22 sont prévues, introduites dans trois passages 28 ménagés dans trois pattes 29 du demi-plateau interne 12B.

Le fonctionnement du dispositif de rattrapage de jeu selon l'invention est le suivant.

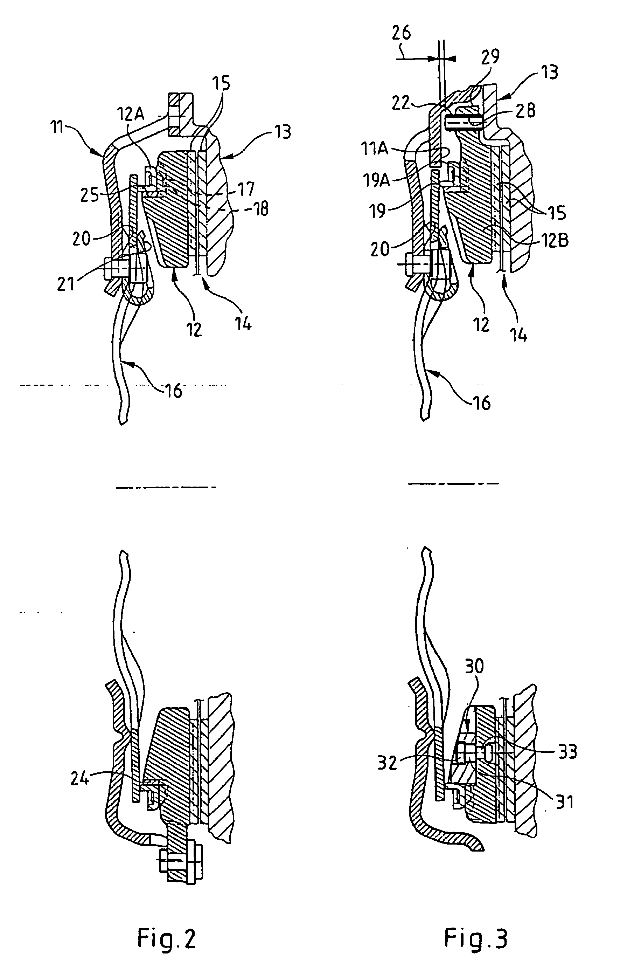

Les figures 2 et 3 représentent l'embrayage embrayé, les garnitures de friction 15 étant neuves et serrées entre le plateau de pression 12 et le plateau de réaction 13.

Dans cette position, une extrémité des goupilles 22 est en butée sur la face interne du plateau de réaction 13, et le demi-plateau externe 12A est en position rentrée, axialement par rapport au redent 25 du demi-plateau interne 12B.

Lorsque l'embrayage est débrayé, le diaphragme 16 a basculé jusqu'à sa position en fin de course de débrayage ; le cordon d'appui 19 n'est plus au contact du diaphragme 16 ; l'autre extrémité de la goupille 22 est au contact du couvercle 11, ici la face interne d'une patte radiale 27 issue du couvercle 11 ; ainsi, la goupille 22 est montée entre cette face interne et celle du plateau de réaction 13 avec un jeu axial 26 qui illustre la course axiale du plateau de pression 12 lors du débrayage.

Lorsqu'il y a usure, notamment des garnitures de friction 15, le plateau de pression 12 se rapproche du plateau de réaction 13, l'embrayage étant embrayé ; lors de ce mouvement, la goupille 22 étant retenue axialement par sa mise en butée sur le plateau de réaction 13, la patte 29 du demi-plateau interne 12B glisse sur la goupille 22 du fait de l'effort axial du diaphragme 16.

Au débrayage après usure, dans un premier temps, la goupille 22 est venue en butée sur le couvercle 11, puis le diaphragme a continué sa course et a décollé du cordon d'appui 19 ; le demi-plateau interne 12B n'ayant reculé que d'une quantité égale au jeu 26, l'épaulement 19A du cordon d'appui 19 est à une distance de la butée couvercle 11A correspondant à l'usure mesurée axialement ; dans un deuxième temps, le demi-plateau externe 12A, qui n'est plus soumis à l'action du diaphragme, est libre de se déplacer en direction du diaphragme 16, grâce aux accélérations auxquelles il est soumis du fait de l'acyclisme du moteur, comme expliqué plus haut ; la sortie du demi-plateau externe 12A se poursuit jusqu'à venue en butée de l'épaulement 19A du cordon d'appui 19 sur la butée couvercle 11A : ainsi, le jeu dû à l'usure a été rattrapé.

Lorsque le jeu dû à l'usure a été rattrapé, et que l'embrayage est à nouveau embrayé, la position de travail du diaphragme 16 est identique à celle qu'il avait au départ, à l'état neuf.

Dans la forme représentée sur la figure 1, les moyens de pilotage comprennent un levier 30 monté à rotation autour d'un moyen de rotation porté ici par le demi-plateau interne 12B ; dans la forme représentée, le moyen de rotation est un axe 31 muni, d'une part, d'une tête 32 retenant axialement ledit levier 30 et, d'autre part, d'une queue 33 par laquelle il est assujetti audit demi-plateau 12B, par exemple par rivetage.

La partie du levier 30 qui s'étend extérieurement radialement au delà de l'axe 31 est disposée au droit de la fente du segment fendu 24 ; pour que cette partie, dite partie active 32 du levier 30, puisse être amenée à expanser ledit segment 24, dans certaines conditions, les extrémités du segment fendu 24, qui définissent sa fente, ont une extension radiale notable, bien supérieure à l'épaisseur radiale du reste du corps du segment 24 ; ici, cette extension radiale est obtenue par des patins 33, 34 rapportés aux extrémités du segment 24, par exemple par soudage ou surmoulage.

Les patins 33,34 sont disposés dans une échancrure 23 du demi-plateau interne 12B.

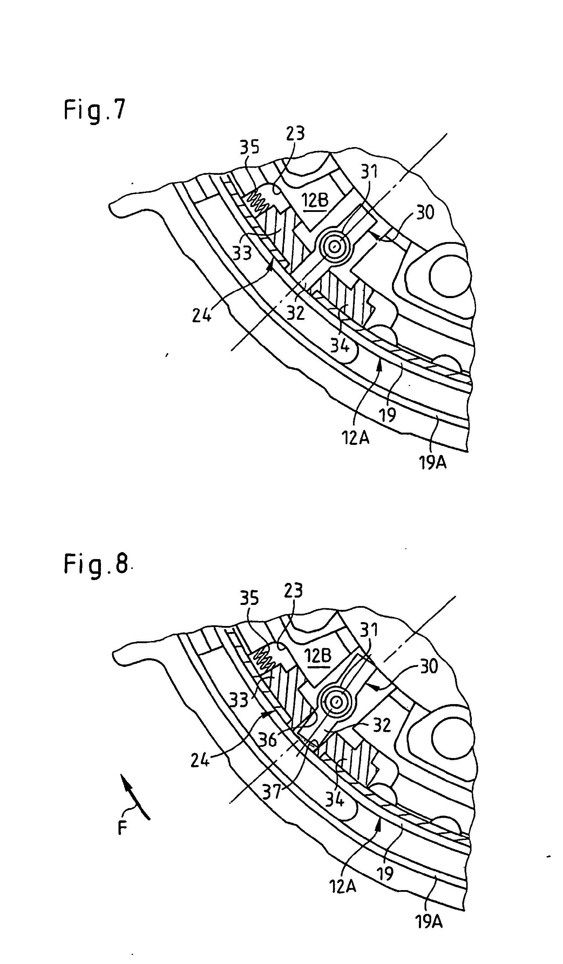

Au repos, le levier 30 est poussé par le ressort 35 dans la position montrée sur la figure 8.

Lors d'une accélération dite négative appliquée au plateau 12B dans le sens horaire, à savoir le sens désigné par la flèche F, figure 8, le segment fendu 24 et ses patins 33, 34 tendent à être déplacés relativement dans le sens contraire du fait de leur inertie propre ; lors de cette accélération, la partie active 32 du levier 30, en contact en 36 sur le patin 33 et en 37 sur le patin 34, les deux points 36 et 37 étant sur des rayons différents, expanse par effet de levier le segment fendu 24 qui est alors serré circonférentiellement contre le demi-plateau 12A et rend celui-ci solidaire du demi-plateau 12B, interdisant ainsi tout rattrapage.

Pour une accélération dans l'autre sens, on obtiendrait un phénomène analogue mais on introduit un fonctionnement dissymétrique.

Pour ce faire, un ressort 35 est disposé dans l'échancrure 23 et est adapté à solliciter le segment 24 par l'intermédiaire de l'un des patins, ici le patin 33, dans un sens de rotation, ici le sens inverse de celui des aiguilles d'une montre.

Ainsi, pour une accélération selon F, le segment 24 est facilement expansé et les rampes 18 d'ajustage sont immobilisées par rapport au plateau de pression 12. Il en est de même pour une accélération dans l'autre sens si elle est insuffisante pour vaincre la charge du ressort 35.

Pour une accélération dans le sens contraire de F suffisante pour vaincre la charge du ressort 35, le segment 24 se referme et les rampes d'ajustage 18 sont libres : une opération de rattrapage est possible.

Bien entendu, pour une accélération très supérieure à la charge du ressort 35, on retrouve le fonctionnement décrit initialement, c'est-à-dire que le segment fendu 24 est expansé et les rampes d'ajustage 18 sont bloquées relativement au plateau de pression 12.

Ainsi, grâce au ressort 35, on évite en quelque sorte une oscillation du levier 30 entre ses deux positions de blocage des rampes 18 par l'expansion du segment fendu 24.

En tarant convenablement le ressort 35, on peut s'arranger pour que, dans la plage des accélérations courantes, le segment fendu 24 soit juste desserré, c'est-à-dire non expansé, mais pas plus.

Grâce au ressort 35, on évite par exemple un sur-rattrapage lors du démarrage d'un moteur équipé d'un double volant amortisseur, qui, comme on le sait, pour une vitesse inférieure à la vitesse de ralenti, est soumis à des phénomènes de résonance conduisant à de fortes accélérations.

Le tarage du ressort 35 doit bien entendu tenir compte de l'effet de démultiplication dû à l'entraînement du segment fendu 24 par la partie active 32 du levier 30, tandis que celle-ci écarte les bords de la fente du segment 24 ; cet effet de démultiplication conduit à une faible expansion du segment 24, eu égard à son déplacement circonférentiel, donc à un effort important.

Dans l'exemple qui vient d'être décrit, les extrémités du segment 24 qui bordent sa fente ont une hauteur radiale suffisante obtenue en rapportant des patins 33, 34 pour coopération avec la partie active 32 du levier 30.

Cette hauteur suffisante peut être obtenue autrement, par exemple en conformant de manière appropriée les extrémités du segment lui-même.

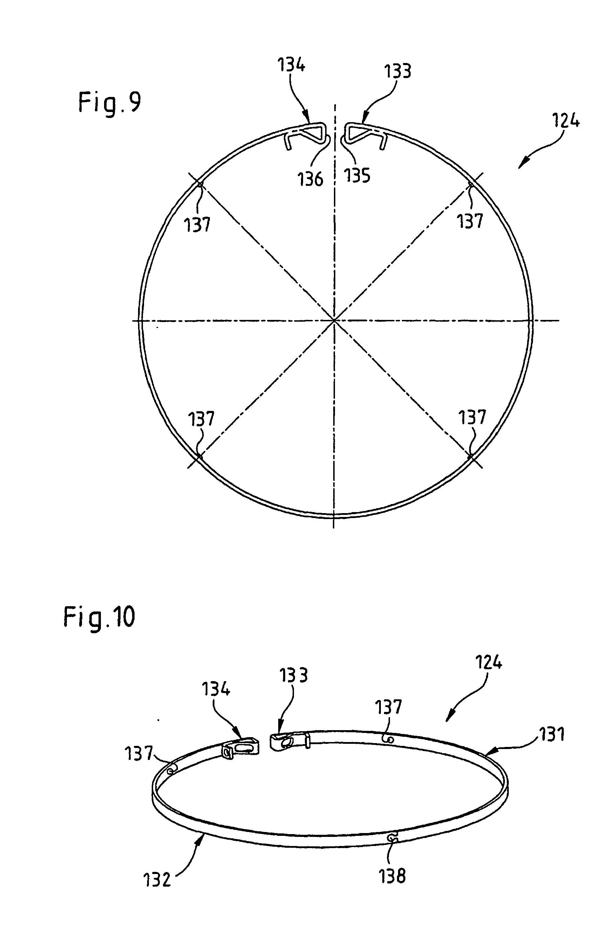

Un exemple est montré sur la figure 9 ; ici, les extrémités d'un segment 124 ont été repliées pour former des boucles 133, 134 ayant des parties droites parallèles 135, 136 définissant la fente du segment fendu 124.

Dans la forme représentée, le segment fendu 124 porte intérieurement des picots 137 radiaux, ici quatre picots 137, destinés à être reçus dans une gorge ou rainure externe du demi-plateau 12B en vue de son maintien axial.

Le segment montré sur la figure 10 est analogue au segment 124 de la figure 9 sauf qu'ici il est en deux parties 131, 132 agrafées en 138.

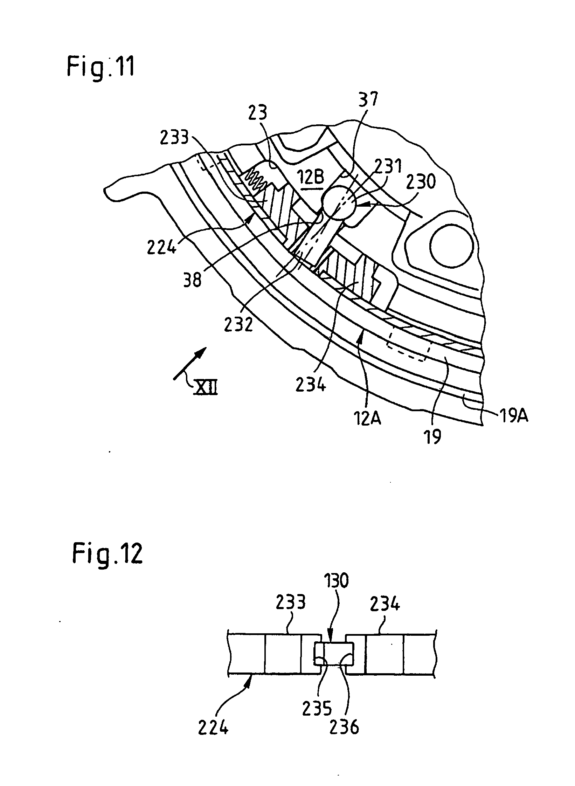

Les figures 11 et 12 montrent une variante de moyens de pilotage en forme de levier.

Ici, le fond de l'échancrure 23 communique par un canal radial 38 avec une échancrure opposée 37 dont le fond constitue un siège pour une queue 231 d'un levier 230 dont la partie active 232, issue de la queue 231, est ici de forme parallélépipédique et traverse le canal radial 38 ; avantageusement, la queue 231 coopère avec ledit siège selon une portée cylindrique ou sphérique, lequel siège peut avoir une forme complémentaire de celle de cette portée. Pour sa retenue axiale, la partie active 232 du levier 230 est reçue dans des rainures 235, 236 ménagées en bout des parties 233, 234 du segment 224.

## Revendications

1. Embrayage à friction pour véhicule automobile à moteur thermique, du genre comportant un plateau de réaction (13) destiné à être calé en rotation sur un arbre menant, un disque de friction (14), portant à sa périphérie externe des garnitures de friction (15), destiné à être calé en rotation sur un arbre mené, un plateau de pression (12), un couvercle (11) fixé sur le plateau de réaction (13), des moyens élastiques à action axiale (16) agissant entre le couvercle (11) et le plateau de pression (12), le plateau de pression (12) étant solidaire en rotation du couvercle (11) tout en pouvant se déplacer axialement par rapport à lui, l'une des pièces, plateau de réaction (13) ou plateau de pression (12) ou couvercle (11), étant constituée de deux demi-pièces, déplaçables axialement, l'une par rapport à l'autre, sous l'action d'un dispositif de rattrapage du jeu dû à l'usure, lequel dispositif de rattrapage de jeu comprend au moins une paire de rampes (17,18) complémentaires disposées circonférentiellement associées axialement respectivement à chacune des deux demi-pièces (12A,12B), l'une des rampes (17) étant adaptée à se déplacer circonférentiellement par rapport à l'autre rampe (18) dans le sens de l'augmentation de l'épaisseur globale de ladite pièce, dit sens de rattrapage, et empêchée de se déplacer dans l'autre sens par un moyen dit unidirectionnel (24,124,224), ledit déplacement circonférentiel étant commandé par un déclencheur (22) sensible à l'état d'usure, l'une des rampes (18) étant ménagée à la périphérie d'une pièce d'inertie (12A), en sorte que l'acyclisme du moteur thermique du véhicule automobile est mis à profit pour faire effectuer aux rampes complémentaires leur déplacement circonférentiel relatif dans le sens de rattrapage du jeu, lequel embrayage comprend des moyens de pilotage adaptés à piloter le dispositif de rattrapage de jeu en autorisant ou non son fonctionnement, ledit moyen unidirectionnel (24, 124,224) étant un segment fendu (24,124,224) solidaire en rotation de ladite pièce (12) et les moyens de pilotage, sensibles à l'accélération, comprenant un levier (30,230) disposé globalement radialement, dont l'extrémité est entre les extrémités du jonc fendu (24,124,224) et qui est adapté à expanser le segment fendu (24,124,224), le levier (30,230) étant monté à rotation sur ladite pièce (12) en sorte qu'il est retenu radialement à l'égard de la force centrifuge.

2. Embrayage selon la revendication 1, **caractérisé par le fait que** ladite pièce est l'un des deux plateaux, plateau de réaction (13) ou plateau de pression (12), dit premier plateau, constitué de deux demi-plateaux, un demi-plateau (12A), dit externe, et un demi-plateau (12B), dit interne, le demi-plateau interne (12B) étant celui qui fait face à une garniture de friction et qui est destiné à coopérer avec elle, les deux demi-plateaux (12A,12B) étant solidaires en rotation de l'arbre menant mais déplaçables axialement, l'un par rapport à l'autre, sous l'action du dispositif de rattrapage de jeu, l'une des rampes (17) dite rampe d'appui, étant solidaire en rotation de l'un (12B) des demi-plateaux, l'autre rampe (18), dite rampe d'ajustage, étant adaptée à se déplacer circonférentiellement par rapport à la rampe d'appui (17) dans le sens de l'augmentation de l'épaisseur globale dudit premier plateau.

3. Embrayage selon la revendication 2, **caractérisé par le fait que** la rampe d'appui (17) est-portée par le demi-plateau interne (12B).

4. Embrayage selon l'une des revendications 2 ou 3, **caractérisé par le fait que** la rampe d'ajustage (18) est portée par le demi-plateau externe (12A).

5. Embrayage selon l'une des revendications 1 à 3, **caractérisé par le fait que** le premier plateau est le plateau de pression (12).

6. Embrayage selon les revendications 3 et 4, dans lequel les moyens élastiques à action axiale (16) sont constitués d'un diaphragme, **caractérisé par le fait que** le demi-plateau externe (12A) est muni d'un cordon d'appui (19) pour le diaphragme.

7. Embrayage selon l'une des revendications 2 à 6, **caractérisé par le fait que** la rampe d'ajustage (18) comprend une série de rampes s'étendant circonférentiellement en extrémité d'une pièce annulaire (12A) en tôle découpée et pliée constituant le demi-plateau externe.

8. Embrayage selon l'une des revendications 1 à 7, **caractérisé par le fait que** le levier (30,230) comprend une partie dite active (32,232) disposée au droit de la fente du segment fendu (124,224).

9. Embrayage selon l'une des revendications 1 à 8, **caractérisé par le fait que** les extrémités (33,133,233 - 34,134,234) du segment fendu (24,124,224) qui définissent sa fente ont une extension radiale.

10. Embrayage selon la revendication 9, **caractérisé par le fait que** l'extension radiale est obtenue par des patins (33,233-34,234) rapportés aux extrémités du segment (24,224).

11. Embrayage selon la revendication 9, **caractérisé par le fait que** l'extension radiale est obtenue par une conformation en boucles (133,134) des extrémités du segment (124).

12. Embrayage selon l'une des revendications 9 à 11, **caractérisé par le fait que** le segment (124) est en une seule pièce.

13. Embrayage selon l'une des revendications 9 à 11, **caractérisé par le fait que** le segment (124) est en deux pièces (131,132) agrafées (138).

14. Embrayage selon l'une des revendications 9 à 13, **caractérisé par le fait que** le segment fendu (124) est retenu axialement.

15. Embrayage selon la revendication 14, **caractérisé par le fait que** la retenue axiale du segment fendu (124) est obtenue par des picots (137) radiaux, qu'il porte intérieurement, reçus dans une gorge ou rainure externe.

16. Embrayage selon l'une des revendications 1 à 15, **caractérisé par le fait que** le segment fendu (24,124,224) est sollicité élastiquement (35) ciconférentiellement dans un sens de rotation.

17. Embrayage selon l'une des revendications 1 à 16, **caractérisé par le fait que** le moyen de rotation est un axe (31).

18. Embrayage selon l'une des revendications 1 à 16, **caractérisé par le fait que** le moyen de rotation est une articulation (231).

19. Embrayage selon la revendication 18, **caractérisé par le fait que**, pour la retenue axiale du levier (230), sa partie active (232) est reçue dans des rainures (235,236) radiales ménagées aux extrémités du segment (224).

## Claims

1. Friction clutch for a motor vehicle with a thermal engine, of the type comprising a reaction plate (13) intended to be fixed with respect to rotation on a driving shaft, a friction disc (14) carrying friction linings (15) at its external periphery, intended to be fixed with respect to rotation to a driven shaft, a pressure plate (12), a cover (11) fixed to the reaction plate (13), axially acting elastic means (16) acting between the cover (11) and the pressure plate (12), the pressure plate (12) being rotationally integral with the cover (11) while being able to move axially with respect to it, one of the parts, reaction plate (13) or pressure plate (12) or cover (11), consisting of two half pieces able to move axially one with respect to the other under the action of a device for taking up play due to wear, the said play take-up device comprising at least one pair of complementary circumferentially disposed ramps (17, 18) respectively associated axially with each of the two half pieces (12A, 12B), one of the ramps (17) being adapted to move circumferentially with respect to the other ramp (18) in the direction of increase in overall thickness of the said piece, referred to as the take-up direction, and prevented from moving in the other direction by a so-called unidirectional means (24, 124, 224), the said circumferential movement being controlled by an actuator (22) sensitive to the state of wear, one of the ramps (18) being provided at the periphery of an inertia piece (12A) so that the irregular rotation speed of the thermal engine of the motor vehicle is taken advantage of in order to make the complementary ramps perform their relative circumferential movement in the direction of taking up play, the said clutch comprising control means adapted to control the play take-up device by enabling it to function or not, the said unidirectional means (24, 124, 224) being a split segment (24, 124, 224) rotationally integral with the said piece (12), and the control means, sensitive to acceleration, comprising a lever (30, 230) disposed roughly radially, the end of which is between the ends of the split ring (24, 124, 224) and which is adapted to expand the split segment (24, 124, 224), the lever (30, 230) being mounted for rotation on the said piece (12) so that it is held radially with regard to centrifugal force.

2. Clutch according to claim 1, **characterised by** the fact that the said piece is one of the two plates, reaction plate (13) or pressure plate (12), referred to as the first plate, consisting of two half plates, a so-called external half plate (12A) and a so-called internal half plate (12B), the internal half plate (12B) being the one that faces a friction lining and that is intended to cooperate with it, the two half plates (12A, 12B) being rotationally integral with the driving shaft but movable axially, one with respect to the other, under the action of the play take-up device, one of the ramps (17), referred to as the support ramp, being rotationally integral with one (12B) of the half plates, the other ramp (18), referred to as the adjustment ramp, being adapted to move circumferentially with respect to the support ramp (17) in the direction of increase in total thickness of the said first plate.

3. Clutch according to claim 2, **characterised by** the fact that the support ramp (17) is carried by the internal half plate (12B).

4. Clutch according to one of claims 2 or 3, **characterised by** the fact that the adjustment ramp (18) is carried by the external half plate (12A).

5. Clutch according to one of claims 1 to 3, **characterised by** the fact that the first plate is the pressure plate (12).

6. Clutch according to claims 3 and 4, in which the axially acting elastic means (16) consist of a diaphragm, **characterised by** the fact that the external half plate (12A) is provided with a support bead (19) for the diaphragm.

7. Clutch according to one of claims 2 to 6, **characterised by** the fact that the adjustment ramp (18) comprises a series of ramps extending circumferentially at the end of an annular piece (12A) made from cropped and bent sheet metal constituting the external half plate.

8. Clutch according to one of claims 1 to 7, **characterised by** the fact that the lever (30, 230) comprises a so-called active part (32, 232) disposed in line with the slot in the split segment (124, 224).

9. Clutch according to one of claims 1 to 8, **characterised by** the fact that the ends (33, 133, 233 - 34, 134, 234) of the split segment (24, 124, 224) that define its slot have a radial extension.

10. Clutch according to claim 9, **characterised by** the fact that the radial extension is obtained by shoes (33, 233 - 34, 234) attached to the ends of the segment (24, 224).

11. Clutch according to claim 9, **characterised by** the fact that the radial extension is obtained by a loop conformation (133, 134) of the ends of the segment (124).

12. Clutch according to one of claims 9 to 11, **characterised by** the fact that the segment (124) is in a single piece.

13. Clutch according to one of claims 9 to 11, **characterised by** the fact that the segment (124) is in two pieces (131, 132) clipped together (138).

14. Clutch according to one of claims 9 to 13, **characterised by** the fact that the split segment (124) is held axially.

15. Clutch according to claim 14, **characterised by** the fact that the axial holding of the split segment (124) is obtained by radial spikes (137) that it carries internally, received in an external groove or recess.

16. Clutch according to one of claims 1 to 15, **characterised by** the fact that the split segment (24, 124, 224) is acted on elastically (35) circumferentially in one direction of rotation.

17. Clutch according to one of claims 1 to 16, **characterised by** the fact that the rotation means is a spindle (21).

18. Clutch according to one of claims 1 to 16, **characterised by** the fact that the rotation means is an articulation (231).

19. Clutch according to claim 18, **characterised by** the fact that, for the axial holding of the lever (230), its active part (232) is received in radial recesses (235, 236) provided at the ends of the segment (224).

## Patentansprüche

1. Reibungskupplung für ein Kraftfahrzeug mit Verbrennungsmotor, umfassend eine Gegendruckplatte (13), die dazu bestimmt ist, drehfest an einer Antriebswelle angebracht zu werden, eine Reibscheibe (14), die an ihrem Außenumfang mit Reibbelägen (15) versehen ist und die dazu bestimmt ist, drehfest an einer Abtriebswelle angebracht zu werden, eine Druckplatte (12), einen an der Gegendruckplatte (13) befestigten Deckel (11), axial wirkende elastische Mittel (16), die zwischen dem Deckel (11) und der Druckplatte (12) wirken, wobei die Druckplatte (12) drehfest mit dem Deckel (11) verbunden ist und sich dabei bezüglich des Deckels axial verschieben kann, wobei eines der Teile, die Gegendruckplatte (13) oder die Druckplatte (12) oder der Deckel (11), aus zwei Teilehälften besteht, die unter der Wirkung einer Vorrichtung zum Ausgleich des auf den Verschleiß zurückzuführenden Spiels in Axialrichtung zueinander verschiebbar sind, wobei die Spielausgleichsvorrichtung mindestens ein Paar komplementärer Rampen (17, 18) umfasst, die umfangsmäßig angeordnet jeweils einer der beiden Teilehälften (12A, 12B) axial zugeordnet sind, wobei eine der Rampen (17) so ausgeführt ist, dass sie sich bezüglich der anderen Rampe (18) in Richtung der Vergrößerung der Gesamtdicke des Teils, der sogenannten Ausgleichsrichtung, umfangsgemäß bewegen kann, und durch eine sogenannte Rücklaufsperre (24, 124, 224) daran gehindert wird, sich in die andere Richtung zu bewegen, wobei die Umfangs-Bewegung durch einen auf den Verschleißzustand reagierenden Auslöser (22) aktiviert wird, wobei eine der Rampen (18) am Umfang eines Trägheitsteils (12A) ausgebildet ist, so dass der Azyklismus des Verbrennungsmotors des Kraftfahrzeugs dazu ausgenutzt wird, die umfangsgemäße Relativbewegung der komplementären Rampen in Spielausgleichsrichtung zu bewirken, wobei die Kupplung Steuermittel enthält, die so ausgeführt sind, dass sie die Spielausgleichsvorrichtung steuern, indem sie ihren Betrieb gestatten oder nicht gestatten, wobei es sich bei der Rücklaufsperre (24, 124, 224) um ein geteiltes Segment (24, 124, 224) handelt, das mit dem Teil (12) drehfest verbunden ist, und die auf Beschleunigung reagierenden Steuermittel einen allgemein radial angeordneten Hebel (30, 230) umfassen, dessen Ende sich zwischen den Enden des Sprengrings (24, 124, 224) befindet und der zum Aufweiten des geteilten Segments (24, 124, 224) ausgeführt ist, wobei der Hebel (30, 230) drehbar an dem Teil (12) so angebracht ist, dass er gegenüber der Zentrifugalkraft in radialer Richtung festgehalten wird.

2. Kupplung nach Anspruch 1, **dadurch gekennzeichnet, dass** das Teil eine der beiden Platten, Gegendruckplatte (13) oder Druckplatte (12), als sogenannte erste Platte ist, die aus zwei Plattenhälften besteht, einer sogenannten äußeren Plattenhälfte (12A) und einer sogenannten inneren Plattenhälfte (12B), wobei die innere Plattenhälfte (12B) jene ist, die einem Reibbelag gegenüberliegt und damit zusammenwirken soll, wobei die beiden Plattenhälften (12A, 12B) drehfest mit der Antriebswelle verbunden sind, sich aber unter der Wirkung der Spielausgleichsvorrichtung relativ zueinander in Axialrichtung verschieben können, wobei eine der Rampen (17), die sogenannte Stützrampe, mit einer (12B) der Plattenhälften drehfest verbunden ist und die andere Rampe (18), die sogenannte Einstellrampe so ausgeführt ist, dass sie sich bezüglich der Stützrampe (17) in Richtung der Vergrößerung der Gesamtdicke der ersten Platte umfangsgemäß bewegen kann.

3. Kupplung nach Anspruch 2, **dadurch gekennzeichnet, dass** die Stützrampe (17) von der inneren Plattenhälfte (12B) getragen ist.

4. Kupplung nach Anspruch 2 oder 3, **dadurch gekennzeichnet, dass** die Einstellrampe (18) von der äußeren Plattenhälfte (12A) getragen wird.

5. Kupplung nach einem der Ansprüche 1 bis 3, **dadurch gekennzeichnet, dass** es sich bei der ersten Platte um die Druckplatte (12) handelt.

6. Kupplung nach den Ansprüchen 3 und 4, bei der die axial wirkenden elastischen Mittel (16) aus einer Federscheibe bestehen, **dadurch gekennzeichnet, dass** die äußere Plattenhälfte (12A) mit einem Stützstreifen (19) für die Federscheibe versehen ist.

7. Kupplung nach einem der Ansprüche 2 bis 6, **dadurch gekennzeichnet, dass** die Einstellrampe (18) eine Reihe von Rampen umfasst, die sich am Rand eines ringförmigen, gestanzten und gebogenen Blechteils (12A), das die äußere Plattenhälfte bildet, um den Umfang erstrecken.

8. Kupplung nach einem der Ansprüche 1 bis 7, **dadurch gekennzeichnet, dass** der Hebel (30, 230) einen sogenannten aktiven Teil (32, 232) umfasst, der am Schlitz des geteilten Segments (124, 224) angeordnet ist.

9. Kupplung nach einem der Ansprüche 1 bis 8, **dadurch gekennzeichnet, dass** die Enden (33, 133, 233 - 34, 134, 234) des geteilten Segments (24, 124, 224), die seinen Schlitz definieren, eine radiale Aufweitung aufweisen.

10. Kupplung nach Anspruch 9, **dadurch gekennzeichnet, dass** die radiale Aufweitung durch an den Enden des Segments (24, 224) befestigte Schuhe (33, 233 - 34, 234) erhalten wird.

11. Kupplung nach Anspruch 9, **dadurch gekennzeichnet, dass** die radiale Ausweitung durch eine schlaufenförmige Konfiguration (133, 134) der Enden des Segments (124) erhalten wird.

12. Kupplung nach einem der Ansprüche 9 bis 11, **dadurch gekennzeichnet, dass** das Segment (124) aus einem einzigen Teil besteht.

13. Kupplung nach einem der Ansprüche 9 bis 11, **dadurch gekennzeichnet, dass** das Segment (124) aus zwei zusammengehefteten (138) Teilen (131, 132) besteht.

14. Kupplung nach einem der Ansprüche 9 bis 13, **dadurch gekennzeichnet, dass** das geteilte Segment (124) axial festgehalten wird.

15. Kupplung nach Anspruch 14, **dadurch gekennzeichnet, dass** das axiale Festhalten des geteilten Segments (124) durch radiale Stifte (137) erfolgt, mit denen es innen versehen ist und die in einer äußeren Auskehlung oder Nut aufgenommen werden.

16. Kupplung nach einem der Ansprüche 1 bis 15, **dadurch gekennzeichnet, dass** das geteilte Segment (24, 124, 224) umfangsmäßig in einer Drehrichtung elastisch beansprucht (35) ist.

17. Kupplung nach einem der Ansprüche 1 bis 16, **dadurch gekennzeichnet, dass** es sich bei dem Drehungsmittel um eine Achse (31) handelt.

18. Kupplung nach einem der Ansprüche 1 bis 16, **dadurch gekennzeichnet, dass** es sich bei dem Drehungsmittel um ein Gelenk (231) handelt.

19. Kupplung nach Anspruch 18, **dadurch gekennzeichnet, dass** zum axialen Festhalten des Hebels (230) sein aktiver Teil (232) in an den Enden des Segments (224) ausgebildeten radialen Nuten (235, 236) aufgenommen ist.
